(19) Europäisches Patentamt
European Patent Office
Office européen des brevets

(11) **EP 2 634 742 A1**

(12) **EUROPEAN PATENT APPLICATION**

(43) Date of publication:
**04.09.2013 Bulletin 2013/36**

(51) Int Cl.:
***G06Q 30/02*** *(2012.01)*

(21) Application number: **13157357.8**

(22) Date of filing: **01.03.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.03.2012 US 201261605908 P
22.05.2012 US 201213477180**

(71) Applicant: **Toluna USA, Inc.
Wilton, CT 06897 (US)**

(72) Inventors:
• **Bremer, John F.
JERSEY CITY, NJ New Jersey 07310 (US)**
• **Terhanian, George
NEW YORK, NY New York 10023 (US)**

(74) Representative: **Bongiovanni, Simone et al
Studio Torta S.p.A.
Via Viotti, 9
10121 Torino (IT)**

(54) **Respondent selection for surveys**

(57) Exemplary embodiments are directed to respondent selection approaches for surveys, such as online surveys. The respondent selection approaches can be provide a selection process that is source independent to select individual respondents based on characteristics of the individual respondents, rather than based on characteristics of the source (e.g., group) with which the respondent is associated. Exemplary embodiments can advantageously use an estimate of a propensity score to select respondents for a survey before the survey is conducted.

```
         510 ┐
    ┌─────────────────────────────────────────────┐
    │   Define Priority Parameters for a Web-based Survey   │
    └─────────────────────────────────────────────┘
                         │
         520 ┐           ▼
    ┌─────────────────────────────────────────────┐
    │        Associate Priority Value Ranges with          │
    │              the Priority Parameters                 │
    └─────────────────────────────────────────────┘
                         │
         530 ┐           ▼
    ┌─────────────────────────────────────────────┐
    │  Generate Mapped Values for the Priority Parameters  │
    │  Based on Quantifiable Characteristics Associated    │
    │            with the Priority Parameters              │
    └─────────────────────────────────────────────┘
                         │
         540 ┐           ▼
    ┌─────────────────────────────────────────────┐
    │          Compute a Priority Score for the            │
    │       Survey Based on the Priority Values            │
    └─────────────────────────────────────────────┘
```

**FIG. 5**

EP 2 634 742 A1

**Description**

CROSS REFERENCE TO RELATED APPLICATIONS

This application claims the benefit of co-pending U.S. non-provisional application entitled "Respondent Selection For Surveys," which was filed on May 22, 2012 and assigned Serial No. 13/477,180, which in turn claims priority to U.S. Provisional Application No. 61/605,908, filed on March 2, 2012. The content of the foregoing applications is incorporated herein by reference.

TECHNICAL FIELD

Exemplary embodiments of the present disclosure are directed to respondent selection for surveys, and more particularly, to source independent respondent selection based on propensity scores generated for potential respondents.

BACKGROUND

Several years ago, market researchers knew little about online survey research. At the time, some were dabbling in the practice but nearly all surveys were still completed via telephone, paper-and-pencil, or face-to-face. Today, market researchers know much more about online survey research and most surveys are completed online. To keep up with online demand, many market research companies have developed their own opt-in panels, which refers to one or more respondent sources maintained by the research companies that includes respondents who have indicated an interest in responding to the research companies surveys. Additionally, some research companies have also launched new methods of accessing potential survey respondents, such as "river sampling" whereby online users, after clicking through an invitation or advertisement on a web site, are directed to a survey for which they might qualify. "Routing" systems have been introduced as well. Among other capabilities, routing systems direct individuals who do not qualify for a survey to another survey, which can increase a type of utilization.

There are many different methods available today for selecting respondents for online surveys. One method may be to select a random sample from the population that is accessible (i.e., "the accessible population") through panels, rivers, and other common sources. If the accessible population has any demographic, attitudinal, or behavioral skews in comparison to the target population, however, then a random sample would reproduce those skews, all other factors being equal. For instance, if women comprise 52 percent of the target population (e.g., all US adults, eighteen and older) but 26 percent of the accessible population, then women would also comprise 26 percent of a random sample, or half the number that researchers may have desired or required to represent the target population. Even when the accessible and target populations are one and the same, a random sample of the accessible population may look different from the sub-sample that eventually completes the particular survey (i.e., "the achieved sample") because of non-response (e.g., non-contact, unwillingness to participate) and non-random attrition within the survey.

Quota sampling may be used as an alternative or modification of simple random sampling. Quota sampling often begins by dividing the target population into a set of mutually-exclusive groups (e.g., men, women, eighteen to twenty-four years old, twenty-five to twenty-nine years old) before specifying how many respondents to recruit from each group. In general, once particular quota groups have been filled, potential respondents who would have otherwise qualified for the survey would be turned away.

While online panels have been used to increase the number of panels available and new ways of accessing and utilizing respondents have been developed (e.g., river sampling and routing), researchers can still find it difficult to complete the needed number of surveys on time, particularly when the target population is rare or in high demand. For all of these reasons, it is common today for researchers to use more than one sample source for some types of surveys. Adding one or more sample sources to the original sample source may address the need for more respondents, but some evidence suggests that it may also increase bias, e.g., the difference between what survey respondents report and what an omniscient observer knows to be true.

Recently, some research has focused on approaches for selecting more than one sample (or respondent) sources for the same survey as a way to reduce bias and as an alternative to conventional probability sampling. Using source selection approaches, sources that include potential respondents are typically selected based on the characteristics of the sources. These source selection approaches may provide consistency (or interchangeability) of new respondent sources with existing respondent sources relative to an external standard, and may provide enhanced representativeness relative to a general population. However, source selection approaches typically limit a supply of potential respondents, and typically rely on benchmark datasets that have either limited shelf lives or uncertain external validity. As a result, source selection approaches may actually reduce sample representativeness and response accuracy.

SUMMARY

Exemplary embodiments are directed to respondent selection approaches for surveys, such as online surveys. The respondent selection approaches can be provide a selection process that is respondent source independent to select individual respondents based on characteristics of the individual, rather than based on characteristics of the source (e.g., group) with which the respondent is associated. Exemplary embodiments can advantageously use an estimate of a propensity score to select respondents for a survey before the survey is conducted.

Exemplary embodiments of the respondent selection approaches of the present disclosure can reduce or minimize bias between a selected and achieved sample, and many target populations. The target populations can include, for example, the general population, the online population, past participants in copy testing or brand tracking programs, or even individuals selected at random to take part in survey research online, by telephone, face-to-face, or through other suitable mediums. Exemplary embodiments of the respondent selection approaches of the present disclosure can be used by one or more entities, such as, for example, market, government, and public opinion researchers, and various types of researchers working in academia, such as statisticians, sociologists, psychologists, and political scientists, as well as any other entities that conduct surveys.

Researchers can use exemplary embodiments of the present disclosure to select online survey respondents who provide information that is more accurate and less variable than information provided by respondents selected by other means. For example, exemplary embodiments of the respondent selection approaches of present disclosure can be more effective than at least some conventional source selection approaches at ensuring sample representativeness and achieving response accuracy.

By increasing sample representativeness, for instance, exemplary embodiments can reduce the risks associated with conducting research with non-probability samples, and by safely unrestricting access to just about any potential respondent irrespective of his or her originating source, exemplary embodiments can accelerate the pace at which online research will grow.

In one embodiment, a method of selecting respondents for a survey is disclosed. The method includes generating a survey for response by a target population, determining a respondent propensity score for a respondent, and determining whether the respondent is a member of the target population based on the propensity score.

In another embodiment, a non-transitory computer readable storage medium that stores instructions is disclosed. Execution of the instructions by a processing device causes the processing device to receive responses to a survey from a treatment and a control group; generating a survey for response by a target population, determine a respondent propensity score for a respondent, and determine whether the respondent is a member of the target population based on the propensity score.

In yet another embodiment, a system for selecting respondents for a survey is disclosed. The system includes a survey for response by a target population and a processing device to determine a respondent propensity score for a respondent and to determine whether the respondent is a member of the target population based on the propensity score.

Other objects and features will become apparent from the following detailed description considered in conjunction with the accompanying drawings. It is to be understood, however, that the drawings are designed as an illustration only and not as a definition of the limits of the invention.

BRIEF DESCRIPTION OF THE DRAWINGS

Figure 1 is a block diagram of an exemplary respondent selection engine.

Figure 2 is a block diagram of an exemplary computing device configured to implement embodiments of a respondent selection engine.

Figure 3 is a computing system for implementing embodiments of a respondent selection engine.

Figure 4 is a flowchart illustrating an exemplary embodiment of a respondent selection process in accordance with exemplary embodiments of the present disclosure.

DESCRIPTION OF EXEMPLARY EMBODIMENTS

Exemplary embodiments of the present disclosure are directed to approaches for selecting respondents for surveys based on how well their individual characteristics (and their joint distribution), as represented by a propensity score, match those of the target population. Exemplary embodiments of the present disclosure can base respondent selection on the characteristics of individuals to decide who to select for particular surveys, instead of basing respondent selection on the characteristics of a source that includes the individual. Thus, the approaches for selecting respondents for surveys of the present disclosure can implement a source independent respondent selection process such that respondents can be directed to a survey from any source.

By employing an estimation of the propensity score at a respondent selection stage (i.e., before a survey is conducted), rather than at a data analysis stage (i.e. after responses to the survey are collected), exemplary embodiments of the present disclosure allow researchers to advantageously benefit from the low cost of asking questions online and the ability to re-use information (e.g., gender) that opt-in panelists and possibly others provided previously. The increasing use of respondent sources other than opt-in panels and the use of router systems can provide additional benefits. For example, when researchers rely on rivers as a sample source, the researchers typically do not know much about potential respondents in advance. By placing the gateway questions in front of a survey to screen potential respondents, the researchers can use an estimate of a propensity score at the survey's "front door" (i.e., before a respondent responds to the survey). Using this approach, researchers can reduce the risk of including the wrong people (e.g., people that are not representative of the target population) as well as the risk of not including enough of the right people (e.g., people that belong to the target population).

In exemplary embodiments of the present disclosure, parallel surveys can be conducted in which respondents corresponding to representative samples of the accessible and target populations respond to the same questions. The surveys can be distributed in one or more formats including electronically, orally, on paper, and/or through other mediums. For example, the surveys can be distributed online via web pages or social media, e-mail, phone (including an automated phone survey), by mail, and/or face-to-face. The surveys can be considered a non-randomized experiment with a treatment (i.e., the sample of respondents from the "accessible population"), a control group (i.e., the sample of respondents from the "target population"), several independent variables (which different researchers might refer to as covariates, balancing variables, or variables), and several outcome variables.

The control group can be a random sample of a selected population, such as a country's general population, its online population, an entire group of individuals interviewed previously in a tracking study or concept testing program, or any other suitable population. The ability to choose different target populations, and, therefore, different calibration samples or control groups, is one distinguishing feature of the respondent selection approaches of the present disclosure from conventional approaches to selection of respondents (e.g., source selection), which may rely on the GSS for calibration, and/or a fixed set of proprietary questions with an emphasis on consistency rather than validity or accuracy.

One or more questions can be chosen to represent independent variables. These questions can account for observed and unobserved differences between the control and treatment groups. Some examples of possible questions include demographic measures, such as age, gender, region, education level, and others measured on the Census or the Current Population Survey. Some possible non-demographic questions can include attitudes towards privacy, attitudes towards security and risk, television viewing behavior, measures of physical activity, and selected attitudes, behaviors and opinions measured on surveys such as the GSS, the American Community Survey (ACS), the National Health Interview Survey (NHIS), and the National Health and Nutrition Examination Survey (NHANES). Questions that are selected should include response choices that are applicable both for control and treatment group members.

One or more questions are chosen to represent outcome measures, which can be used to validate, and possibly calibrate, the propensity score model that is developed. The measures are generally verifiable; that is, the accuracy or veracity of the response to these questions are generally known and/or can be ascertained without an omniscient observer. Some possibilities include, but are not limited to measures representing sales forecasts, past voting behavior (or, depending on timing, candidate or party preference for an imminent election), possession of a driver's license, possession of a passport, and certain buying behaviors. Questions for outcome measures can also include attitudes, behaviors and opinions measured on surveys such as the GSS, ACS, NHIS, NHANES, and possibly others, including certain telephone and face-to-face omnibus surveys.

Questions are typically chosen so that the responses contain as little error as possible. Excluding questions with responses that are potentially embarrassing or socially desirable is in line with the recommendation, particularly if such questions were administered aurally or in the presence of an interviewer. It may be necessary to make some trade-offs. In some embodiments, in order to include current information in the modeling, for instance, non-government funded studies, such as a telephone or face-to-face omnibus surveys conducted by a market research company can be used.

Responses to the parallel surveys are collected and logistic regression can be used to estimate a propensity score for each respondent, i.e., a probability of a respondent being a member of the control group rather than the treatment group. For example, in one embodiment, the propensity score, p(x), can be mathematically represented as follows:

$$p(x) = \Pr(T = 1 \mid X = x), \tag{1}$$

where T is a treatment (e.g., the sample of respondents from the accessible population) and *X* are independent variables. Y(0) and Y(1) can denote the potential outcomes under control and treatment, respectively. The treatment assignment is (conditionally) unconfounded if treatment is independent of potential outcomes conditional on X ($T \perp Y(0), Y(1) \mid X$, denotes statsitcal independence), and if unconfoundedness holds then $T \perp Y(0), Y(1) \mid p(X)$. The logistic regression can be used to determine the propensity score by fitting the data to a logistic function, $f(z)$, which can be represented mathematically as follows:

$$f(z) = \frac{1}{1 + e^{-z}} \, , \hspace{4cm} (2)$$

where z is the logit, which is a measure of the total contribution of all the independent variables. In one embodiment, z can be represented mathematically as follows:

$$z = \beta_0 + \beta_1 x_1 + \beta_2 x_2 + \cdots + \beta_k x_k \, , \hspace{3cm} (3)$$

where $\beta_0$ can denote the intercept, $\beta_1$, $\beta_2$, $\beta_3$ can denote the regression coefficients, and $x_1$, $x_2$, $x_3$ can denote the independent variables.

The greater the propensity score a respondent receives the more likely it is that the respondent is a member of the control group. Models for calculating the propensity score can be chosen that minimize the differences on the outcome measures among control and treatment group members with the same, or similar, propensity scores. In the interest of economy, it may be prudent to drop certain variables from the model. A distribution of propensity scores can be generated for the control group, which can be used to determine which respondents to select for future surveys.

Certain respondent selection procedures implemented today in telephone surveys, such as asking to speak only with males after female quotas have been filled, may produce bias, particularly when males who are available for the interview differ from those who are not (and, more generally, from the population of all males). Exemplary embodiments of the present disclosure may provide a way to develop more-encompassing quotas. If researchers develop such quotas with great care, they might enhance the representativeness of the selected and achieved sample without increasing the costs or time needed to conduct telephone surveys.

Many other possible applications for exemplary embodiments of the present disclosure. For instance, any researcher who selects respondents from multiple sampling frames (e.g., a landline frame and a cell phone frame) needs to figure out how to pool the resulting responses. Rather than trying to determine in advance precisely how many interviews to complete via each mode, it may make more sense to let the numbers fall where they may based on how the characteristics of the respondents, irrespective of the sampling frame or interviewing mode, compare to those of a benchmark sample.

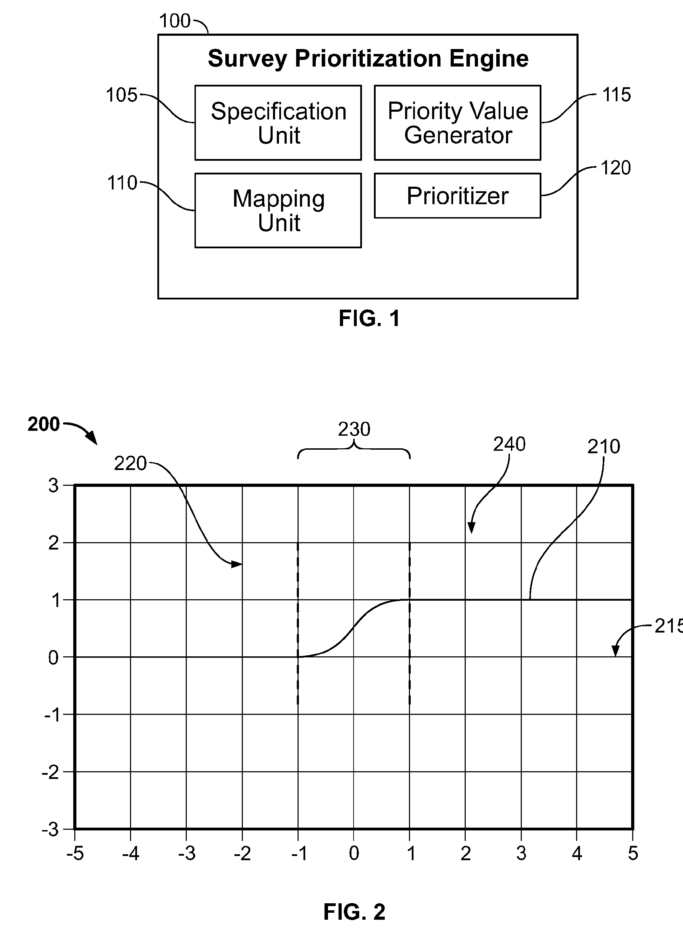

Figure 1 is a block diagram of an exemplary respondent selection engine 100 (hereinafter "engine 100"). The engine 100 can include a propensity survey generator 110 (hereinafter "generator 110"), an analyzer 120, and a respondent selector 130 (hereinafter "selector 130"). The engine 100 can be configured to generate surveys that include questions for determining a respondents propensity score and selecting respondents for subsequent surveys based on the respondents propensity score.

The generator 105 can be used to generate surveys for determining propensity scores for respondents. The generator can generate surveys for distribution, such as distribution online via the Internet. For example, the generator 105 can be used to generate one or surveys to be conducted in parallel in which respondents corresponding to representative samples of the accessible and target populations respond to identical questions during the same general time period. The surveys generated by the generator may be considered a non-randomized experiment with a treatment (i.e., the sample of respondents from the "accessible population"), a control group (i.e., the sample of respondents from the "target population"), and can include several independent and outcome variables. The control group can be a random sample of a selected population, such as a country's general population, its online population, an entire group of individuals interviewed previously in a tracking study or concept testing program, or any other suitable population. The ability to choose different target populations, and, therefore, different calibration samples or control groups, is one distinguishing feature of the respondent selection approaches of the present disclosure from conventional approaches to selection of respondents (e.g., source selection), which may rely on the GSS for calibration, and/or a fixed set of proprietary questions with an emphasis on consistency rather than validity or accuracy.

One or more questions can be selected or generated and incorporated into the parallel surveys to represent independent and output variables. The questions representing the independent variables ("independent variable questions") can account for observed and unobserved differences between the control and treatment groups. Some examples of possible independent variable questions can include demographic measures, such as age, gender, region, education level, and others measured on the Census or the Current Population Survey. Some possible non-demographic questions can include attitudes towards privacy, attitudes towards security and risk, television viewing behavior, measures of physical activity, and selected attitudes, behaviors and opinions measured on surveys such as the GSS, the American Community Survey (ACS), the National Health Interview Survey (NHIS), and the National Health and Nutrition Examination Survey (NHANES). Questions that are selected should include response choices that are applicable both for control and treatment group members.

The questions representing the outcome measures can be used to validate and possibly calibrate the model that is developed later. The measures are generally verifiable; that is, the accuracy or veracity of the response to these questions are generally known and/or can be ascertained without an omniscient observer. Some possibilities include, but are not limited to measures representing sales forecasts, past voting behavior (or, depending on timing, candidate or party preference for an imminent election), possession of a driver's license, possession of a passport, and certain buying behaviors. Questions for outcome measures can also include attitudes, behaviors and opinions measured on surveys such as the GSS, ACS, NHIS, NHANES, and possibly others, including certain telephone and face-to-face omnibus surveys.

Questions are typically chosen so that the responses contain as little error as possible. Excluding questions with responses that are potentially embarrassing or socially desirable is in line with the recommendation, particularly if such questions were administered aurally or in the presence of an interviewer. It may be necessary to make some trade-offs. In some embodiments, in order to include current information in the modeling, for instance, non-government funded studies, such as a telephone or face-to-face omnibus surveys conducted by a market research company can be used.

The analyzer 120 can collect the responses to the parallel surveys and can process the responses using logistic regression based on a selected model. Using the logistic regression, the analyzer 120 can generate a propensity scores for the respondents to the parallel surveys based on the answers provided by the respondents to the questions representing the independent and outcome variables. Using the generated propensity scores, the analyzer 120 can generate a propensity score distribution for the propensity scores. The propensity scores and/or the propensity score distribution can be used by the selector 130 for respondent selection in subsequent surveys. For example, the analyzer can generate a propensity score distribution of the propensity scores for the control group.

Other techniques or methodologies, such as weighting (e.g., raking, cell weighting, propensity score weighting), to create possible efficiencies, to reduce bias further, or both can be used in combination with the generated propensity scores and propensity score distribution. For instance, if there are imbalances in the propensity score distribution for any number of reasons (e.g., differential drop outs by quintile or decile, implementation problems, time constraints), then weighting might help to reduce bias. In some embodiments, weighting on the propensity score as well as on various socio-demographic characteristics can reduce more bias than weighting on the propensity score alone.

The selector 130 can be used for subsequent surveys to select potential respondents on an individual basis on their propensity score. For example, respondents have a specified propensity score can be associated with the target population independent of the source from which the respondent originates. In some embodiments, the survey can use previously collected and stored information from opt-in panelists including to obtain their propensity scores. In some embodiments, as part of the respondent selection process for subsequent surveys, the surveys can be associated with gateway questions that are presented to potential respondents. The gateway questions can be used to estimate the propensity score. Using gateway questions can be an effective approach to screen potential respondents based on their propensity score before allowing them to proceed with the survey. Particularly, this can be an effective approach for respondents that the researcher does not already have the requisite information for determining the respondent's propensity score, which can occur of the, for example, the respondent is directed to the survey by a river. Using this approach, the researcher can determine whether the respondent is a member of the target population for which the survey was generated.

The selector 130 assigns respondents, irrespective of their originating sample source, a propensity score, which can be generated in real-time using the analyzer 120 or can be retrieved from a previous calculation. The propensity scores can be used by the selector 120 to associate the respondents with available surveys. In some embodiments, the propensity score of respondent can be calculated each for each survey to determine whether the respondent is a member of the target population. The selector 130 can continue assigning respondents to surveys based on their propensity scores until, for example, all propensity score quotas have been filled. In theory, the joint distribution of the characteristics of respondents directed to those surveys should match those of the target population, even when it includes non-online users. Moreover, the responses those individuals give to new survey questions should compare favorably to those that a representative sample of the target population would have given had it been selected through probability sampling.

Figure 2 is a block diagram of an exemplary computing device 200 configured to implement exemplary embodiments of the engine 100. The computing device 200 can be a mainframe, personal computer (PC), laptop computer, workstation, server, handheld device, such as a portable digital assistant (PDA), and the like. In the illustrated embodiment, the computing device 200 includes a processing device 202, such as a central processing device, and can include a computer storage device 204 (hereinafter "storage 204"). The computing device 200 can further include input/output devices 206, such as a display device, keyboard, touch screen, mouse, printer, and the like, and can include a network interface 208 to facilitate communication between the computing device 200 and other devices communicative coupled to a network.

The storage 204 stores data and instructions and can be implemented using non-transitory computer readable storage medium technologies, such as a floppy drive, hard drive, tape drive, Flash drive, optical drive, read only memory (ROM), random access memory (RAM), and the like. For example, the storage 204 can store surveys, survey questions, respondent, responses to surveys, information including, for example, information that can be sued to determine the propensity scores of associated with the respondent and/or the propensity scores themselves, propensity score distributions, and the like, generated or used by the engine 100. Applications, such as an embodiment of the engine 100, or portions thereof, can be resident in the storage 204 and can include instructions for implementing the applications. The storage 204 can be local or remote to the computing device 200. The processing device 202 operates to run the applications in storage 204, such as the engine 100, by executing instructions therein and storing data resulting from the executed instructions, such as surveys, survey questions, respondent, responses to surveys, information including, for example, information that can be sued to determine the propensity scores of associated with the respondent and/or the propensity scores themselves, propensity score distributions, and the like.

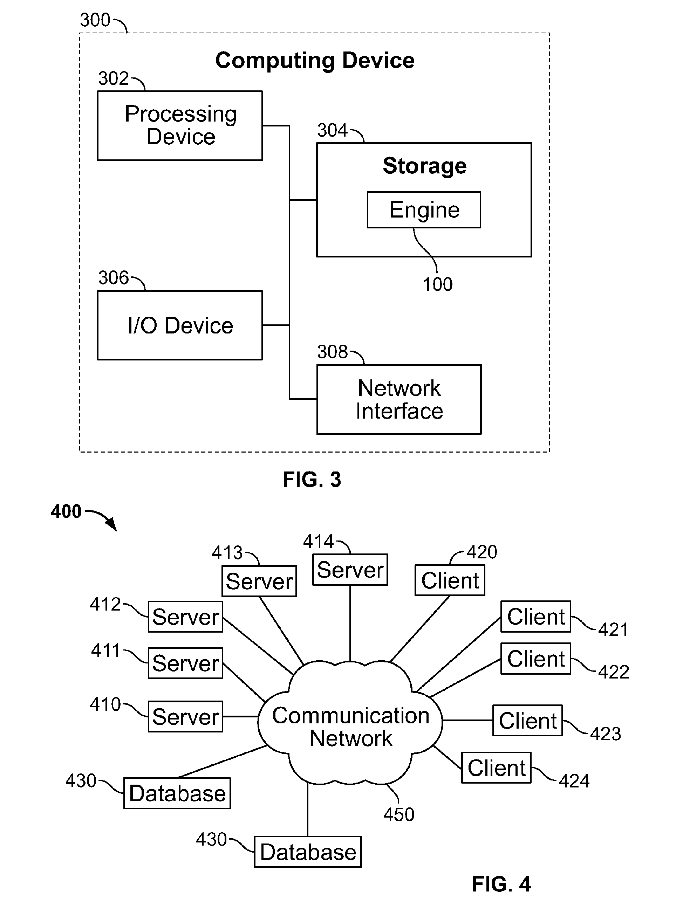

Figure 3 is a block diagram of an exemplary computing system 300 configured to implement one or more embodiments of the engine 100. The computing system 300 includes servers 310-314 operatively coupled to clients 320-324, via a communication network 350, which can be any network over which information can be transmitted between devices communicatively coupled to the network. For example, the communication network 350 can be the Internet, Intranet, virtual private network (VPN), wide area network (WAN), local area network (LAN), and the like. The computing system 300 can include repositories or database devices 330, which can be operatively coupled to the servers 310-314, as well as to clients 320-324, via the communications network 350. The servers 310-314, clients 320-324, and database devices 330 can be implemented as computing devices. Those skilled in the art will recognize that the database devices 330 can be incorporated into one or more of the servers 310-314 such that one or more of the servers can include databases.

In an exemplary embodiment, the engine 100 can be distributed among different devices (e.g., servers, clients, databases) in the communication network 350 such that one or more components of the engine 100, or portions thereof, can be implemented by different devices in the communication network 350. For example, in illustrative embodiments, the generator 110 can be implemented by the server 310, the analyzer 120 can be implemented by the server 311, and the selector can be implemented by the server 312.

In an exemplary embodiment, servers 311-314 can be web servers configured to host web pages. Server 310 can be configured to implement the engine 100 and servers 311-314 can be configured to host web-based surveys. Client 320 can represent the surveying entity and clients 321-324 can represent survey respondents. The database devices 330 can be configured to store surveys, survey questions, respondent, responses to surveys, information including, for example, information that can be sued to determine the propensity scores of associated with the respondent and/or the propensity scores themselves, propensity score distributions, and the like. In an exemplary operation, the respondents can access and respond to the surveys hosted by the servers 311-314 using a web browser implemented by the client devices 321-424.

Before a respondent respond to the surveys, the engine can determine a propensity score associated with the respondent based on previously collected information about the respondent, by retrieving a propensity score previously generated for the respondent, and/or by presenting gateway questions to the respondent and generating the propensity score for the respondent based on the respond to the gateway questions. If the respondent qualifies for the survey, e.g., the respondent's propensity score satisfies a specified propensity score for the survey, the survey can be provided to the respondent for response. Otherwise, the survey is not provided to the respondent for response. In some embodiments, if the respondents propensity score does not satisfy the specified propensity score for a survey the respondent can be redirected (e.g., routed) to another survey.

Figure 4 is a flowchart illustrating an exemplary respondent selection process that can be implemented in accordance with exemplary embodiments of the present disclosure. To begin parallel surveys can be generated to include questions corresponding to independent and outcome variables (400). The parallel surveys can be distributed to representative samples of an accessible population (i.e., the treatment) and a target population (i.e., the control) (402). Different target populations, and, therefore, different calibration samples or control groups can be chosen. Questions representing the independent and outcome variables are typically chosen so that the responses contain as little error as possible (e.g., by using questions that do not provke false answers).

Responses to the parallel surveys are collected (404) and logistic regression can be used to estimate a propensity score for each respondent based on the responses submitted by the respondent (406). Using the generated propensity scores, a propensity score distribution can be generated for the propensity scores. The propensity scores and/or the propensity score distribution provide a basis for respondent selection in subsequent surveys. For example, the analyzer can generate a propensity score distribution of the propensity scores for the control group. A subsequent survey is generated (408), and respondents are selected based on a propensity score associated with the respondents such that a the respondents are selected as a target population based on desired propensity scores (410).

In some embodiments, the subsequent survey can be distributed via the Internet and may available to any respondent such that the propensity score of some respondent can be unknown. To ensure that the respondents have an appropriate propensity score, questions can be presented to the respondent before the survey is conducted, the response to which can be used to estimate the respondents propensity score in real-time. A determination as to whether the respondent can take the survey or not can be made based on the propensity score generated for the respondent based on the respondents response to the questions presented before the survey is conducted. If the respondent's propensity score is appropriate, the survey is presented to the respondent for response. Otherwise, the respondent is denied and/or router to another survey.

Simulations were performed to evaluate the effectiveness of an exemplary embodiment of the respondent selection approaches of the present disclosure using data from a fifteen-minute survey that explored various topics (content questions), including general issues, attitudes towards privacy, technology ownership, and online behaviors. , The exemplary embodiment of the present disclosure is referred to below as "Propensity Score Select."

1. **General Issues:** Quality of health, Approval for President Obama, Degree of religiousness, Own passport, Possess driver's license, Smoke cigarettes, TV viewing per week

2. **Attitudes Towards Privacy:** AIDS screening at work, Unsolicited calls for selling purposes, Cookies on computers for tracking purposes, Airport searches based on visual profiles

3. **Technology Ownership:** Smartphone, Digital Camera, Tablet Computer, Game Console, Satellite Radio, eBook Reader

4. **Online Behaviors** (since 1/1/11): Made purchase, Banked, Used social network/media Application, Uploaded picture, Watched video, Participated in auction

The survey questionnaire was administered in late February and early March, 2011 via two modes (telephone and online) to four samples (one telephone, three online). For the telephone sample, quotas were established for region and gender. For the online samples, quotas were established not only for region and gender but also for age, race-ethnicity, and education level. Table 1 shows the quota targets for the online samples.

**Table 1. Quota Targets for the Online Samples**

|  | Total (1100) | Male (550) | Female (550) |
|---|---|---|---|
| Northeast | 19% | 18% | 18% |
| Midwest | 22% | 22% | 22% |
| South | 37% | 37% | 37% |
| West | 23% | 23% | 22% |
| Ages 18-24 | >= 9% |  |  |
| Ages 25-34 | >= 12% |  |  |
| Ages 35-44 | >= 12% |  |  |
| Ages 45-54 | >= 13% |  |  |
| Ages 55-64 | >= 10% |  |  |
| Ages 65+ | >= 11% |  |  |
| African-American | >= 10% |  |  |
| Hispanic | >= 10% |  |  |
| Less than HS grad | >= 11 % |  |  |
| HS grad | >= 27% |  |  |
| Some college | >= 23% |  |  |
| College grad | >= 26% |  |  |

The following provides additional details of the four samples:

• **Telephone (Landline):** 1019 completed interviews among respondents residing in private households in the continental US. Respondents were contacted through random-digit-dialing by the Opinion Research Corporation during the period February 24-27, 2011. The data were weighted to Census or CPS estimates to bring proportions for region, gender, age, race-ethnicity, education, household income, and "lived in home without landline in past two years" in line with those of the population.

- **Direct Invitation (Online):** 1100 completed interviews during the period March 2-6, 2011 among members of Toluna's online opt-in panel who were invited directly to the survey by email. The data to be presented here were not weighted.
- **River (Online):** 1100 completed interviews during the period March 2-6, 2011 among non-members of Toluna's online opt-in panel who were directed to the survey after clicking through an advertisement or link on the Internet. The data to be presented here were not weighted.
- **Router (Online):** 1098 completed interviews during the period March 2-6, 2011 among members and non-members of Toluna's online opt-in panel who were routed to the survey, typically after not having qualified for one or more other surveys. The data to be presented here were not weighted.

To estimate each respondent's propensity score, the parallel surveys used questions representing region, gender, age, race-ethnicity, level of education, household income and several attitudes or opinions covering broad areas and issues that differentiate online users who take part in online surveys from members of the general population.

Although it is possible to estimate more than one propensity score for each respondent (e.g., one to reduce or eliminate differences between respondents and the general population, and a second to reduce differences between respondents and the online population), estimate were generated for the general population score.

To simulate the effects of exemplary embodiments of the respondent selection approaches of the present disclosure, a precursor to estimating its accuracy, a stratified random sample of 1000 distributed equally across a lone stratum; namely, the general population propensity score quintile distribution was selected from the combined pool of online respondents. The Propensity Score Select sample, therefore, is a sub-sample of respondents who are also represented in the direct invitation, river, and router samples.

To assess accuracy, the modal response of each question is regarded as the question of interest. For each source, the (absolute) difference between each question's modal response and the benchmark is calculated. The overall average of those differences can be referred to as the "mean absolute deviation".

The second, measure is the Mean Squared Error (MSE). The MSE is a measure for comparing two or more sets of estimates because it takes into account the mean absolute deviation of the estimates (i.e., the first measure) as well as the variability of those estimates.

For the demographic and household questions, information from the 2010 Census, the Current Population Survey, or other government-funded surveys can serve as the benchmarks. For all but one content question (see footnote in Table 5), the responses from the telephone survey are selected as the benchmarks.

The accuracy of the responses to the five demographic questions that served as quotas, the four demographic and household questions that did not serve as quotas, and the twenty-three content questions will now be considered. The sample (or selection method) with the lowest (average) score on the MSE will be considered the most accurate.

The information in Table 2 suggests that the quotas for region, gender, age, race-ethnicity, and education level were implemented correctly--the minimum targets that Table 1 reported were either achieved or nearly achieved. Table 2 suggests, as well, that individuals who were selected through the Propensity Score Select methodology gave responses that were the most accurate and the least variable. For these reasons, the Propensity Score Select MSE was 80% lower than that of Direct Invitation respondents, its closest competitor, and, at the other extreme, 632% lower than that of River respondents.

One measure that stands out in Table 2 is the comparatively high percentage of *River* respondents (37.9% versus a benchmark of 30.4%) who selected "high school" as the last grade in school they completed, or degree they received. This may be a result of the decision not to place caps on the education level quotas.

## Table 2. Accuracy of the Responses to "Demographic, Quota" Questions

| Modal Response | Benchmark | Direct Invitation | River | Router | Propensity Score |
|---|---|---|---|---|---|
| % | % | % | % | % | % |
| Region, "South" | 37.2 | 36.6 | 36.6 | 35.9 | 35 |
| Gender, "Female" | 51.4 | 50 | 50 | 52.4 | 53.1 |
| Age Grouping, "45-54" | 19 | 19.4 | 19.8 | 19.4 | 19.4 |
| Race-Ethnicity, "White, | 67.8 | 66.5 | 71.4 | 72.7 | 68.8 |
| Education, "HS Degree" | 30.4 | 26.7 | 37.9 | 28.8 | 31.7 |
| *Key Measures* | | | | | |
| *Base* | | *1100* | *1100* | *1098* | *1000* |
| *Mean Absolute Deviation* | | *1.5* | *2.8* | *1.8* | *1.3* |
| *Variance* | | *1.7* | *8.4* | *3.1* | *0.5* |
| *MSE* | | *4* | *16.1* | *6.5* | *2.2* |
| *MSE vs. PSS* | | *-80%* | *-632%* | *-194%* | |

The information in Table 3 indicates that the *Propensity Score Select* MSE was 15% higher than that of *River* respondents and roughly 186% lower than that of both Direct Invitation and Router respondents. As a reminder, the four benchmark responses that are reported in Table 3 did not play a role (i.e., through quotas) in the original respondent selection process.

One measure that stands out in Table 3 is the comparatively high percentage of "married" respondents (59.3% versus a benchmark of 53.6%) in the Router sample. An obvious implication is that Router respondents are more likely to be married than others. Implications can have their own implications (e.g., it might be prudent to establish quotas on marital status when selecting respondents through the Router, or it might make sense to include marital status in a propensity score model) but we will not pursue this line of thinking further here.

## Table 3. Accuracy of the Responses to "Demographic (Non Quota) and Household" Questions

| Modal Response | Benchmark | Direct Invitation | River | Router | Propensity Score |
|---|---|---|---|---|---|
| % | % | % | % | % | % |
| HH Income, "$50-$74.99k | 17.7 | 22.7 | 18.4 | 21 | 19.7 |
| Marital Status, "Married" | 53.6 | 58.2 | 52.3 | 59.3 | 53.3 |
| Own or Rent, "Own" | 66.2 | 68.6 | 61.9 | 68.9 | 64.2 |
| Household Members, "2" | 33.4 | 38.6 | 33.9 | 38.7 | 37.6 |
| *Key Measures* | | | | | |
| *Base* | | *1100* | *1100* | *1098* | *1000* |
| *Mean Absolute Deviation* | | *4.3* | *1.7* | *4.3* | *2.1* |
| *Variance* | | *1.7* | *3.1* | *2.2* | *2.6* |
| *MSE* | | *20.2* | *6* | *20.2* | *7.1* |
| *MSE vs. PSS* | | *-185%* | *15%* | *-186%* | |

Table 4 summarizes the information reported in Tables 2 and 3. The summary suggests that the individuals who were selected through the *Propensity Score Select* methodology gave the most accurate responses across the nine measures--the *Propensity Score Select* MSE of 4.2 was 162% lower than the River MSE of 11. We recognize that buyers of market research, among others, are far more concerned with the accuracy of responses to content questions, a topic to which is discussed in more detail below.

## Table 4. Accuracy of the Responses to All "Demographic and Household" Questions

| All Demographic and Household Questions | Direct Invitation | River | Router | Propensity Score |
|---|---|---|---|---|
| Key Measures | | | | |
| Base | 1100 | 1100 | 1098 | 1000 |
| Mean Absolute Deviation | 2.7 | 2.3 | 2.9 | 1.7 |
| Variance | 3.7 | 5.7 | 4 | 1.4 |
| MSE | 11.2 | 11 | 12.4 | 4.2 |
| MSE vs. PSS | -168% | -162% | -198% | |

Seven questions were included in the "General Questions" section. As Table 5 shows, responses from individuals selected through the *Propensity Score Select* methodology differed by 3.4 percentage points, on average, from the benchmark. The *Propensity Score Select* responses were also less variable than those from the other sources. For these reasons, the Propensity Score Select MSE was 49 percent lower than the Direct Invitation MSE, its closest competitor.

## Table 5. Accuracy of the Responses to "General" Questions

| Modal Response | Benchmark | Direct Invitation | River | Router | Propensity Score |
|---|---|---|---|---|---|
| % | % | % | % | % | % |
| Health, "Good" | 32.3 | 32 | 33.6 | 32.2 | 31.5 |
| Obama, "Approve" | 46.6 | 53.3 | 48.2 | 48.5 | 53.9 |
| Religious, "Moderately" | 40.2 | 37.2 | 39.2 | 36.1 | 38.1 |
| Passport, "Do not Own" | 56.7 | 55.6 | 61.5 | 56 | 55.8 |
| Driver's License, "Have" | 85.5 | 88.4 | 84.8 | 88.1 | 86.4 |
| Smoke Cigarettes, "Not at | 80.7 | 73.5 | 64 | 68.6 | 77.8 |
| TV , "2 hrs per Week" | 25.5 | 15.5 | 14.6 | 15.2 | 16.9 |
| Key Measures | | | | | |
| Base | 1019 | 1100 | 1100 | 1098 | 1000 |
| Mean Absolute Deviation | | 4.5 | 5.3 | 4.5 | 3.4 |
| Variance | | 12.7 | 38.5 | 22.6 | 10.6 |
| MSE | | 32.6 | 66.4 | 43.3 | 21.8 |
| MSE vs. PSS | | -49% | -204% | -98% | |

*Note: The National Household Interview Survey (2010) is the source of the percent of adults who report that they smoke cigarettes "not at all".

The "Attitudes Towards Privacy" section included four questions. Responses from individuals selected through the *Propensity Score Select* methodology differed by 2.4 percentage points, on average, from the benchmark, as Table 6 shows. As with the "General Questions", the *Propensity Score Select* set of responses was less variable than the others. As a result, the *Propensity Score Select* MSE was 419 percent lower than its closest competitor.

**Table 6. Accuracy of the Responses to "Attitudes Towards Privacy" Questions**

| Modal Response | Benchmark | Direct Invitation | River | Router | Propensity Score |
|---|---|---|---|---|---|
| % | % | % | % | % | % |
| AIDS Screening, | 53.5 | 49.6 | 43.2 | 47.6 | 51.4 |
| Unsolicited Calls, | 67.3 | 78.3 | 76.9 | 77.8 | 69.2 |
| Cookies, "Violation" | 65.8 | 71.3 | 72.1 | 70.2 | 70.7 |
| Airport Search, "No | 60.4 | 59.7 | 59.2 | 64.5 | 61.2 |
| *Key Measures* | | | | | |
| *Base* | *1019* | *1100* | *1100* | *1098* | *1000* |
| *Mean Absolute Deviation* | | *5.3* | *6.9* | *6.2* | *2.4* |
| *Variance* | | *18.5* | *17.2* | *8.7* | *3* |
| *MSE* | | *46.4* | *64.2* | *47.5* | *8.9* |
| *MSE vs. PSS* | | *-419%* | *-618%* | *-432%* | |

The "Technology Ownership" section included six questions. As Table 7 shows, responses from individuals selected through the Propensity Score Select methodology differed by 2.3 percentage points, on average, from the benchmark. The Propensity Score Select responses were less variable than those from Direct Invitation and Router sources but slightly more variable than those from the River. The Propensity Score Select MSE was the lowest of all by a slim margin.

**Table 7. Accuracy of the Responses to "Technology Ownership" Questions**

| Modal Response | Benchmark | Direct Invitation | River | Router | Propensity Score |
|---|---|---|---|---|---|
| % | % | % | % | % | % |
| Own Smartphone, "No" | 58.8 | 61.6 | 64.7 | 60.8 | 63.2 |
| Own Digital Camera, | 73.4 | 82.3 | 77.6 | 82.1 | 80.5 |
| Own Tablet, "No" | 91.4 | 93.1 | 92.2 | 91.6 | 92.2 |
| Own Game Console, "No" | 53 | 50.2 | 53.1 | 52.2 | 52.9 |
| Own Satellite Radio, "No" | 78.5 | 79.9 | 82.9 | 77.4 | 79.2 |
| Own eBook Reader, "No" | 90 | 88.4 | 88.7 | 87.8 | 90.7 |
| *Key Measures* | | | | | |
| *Base* | *1019* | *1100* | *1100* | *1098* | *1000* |
| *Mean Absolute Deviation* | | *3.2* | *2.8* | *2.5* | *2.3* |
| *Variance* | | *8.2* | *5.5* | *9.8* | *7.9* |
| *MSE* | | *18.4* | *13.3* | *16* | *13.2* |
| *MSE vs. PSS* | | *-39%* | *0%* | *-21%* | |

The evidence presented in Table 7, and possible implications of this evidence (e.g., it may be safe to use an online approach to estimate the percent of adults who own different technology products)

Six questions were included in the "Online Behaviors" section. As Table 8 shows, responses from individuals selected through the Propensity Score Select methodology differed by 5.1 percentage points from the benchmark, the lowest difference of all shown. The Propensity Score Select MSE was 7 percent lower than the MSE of River respondents, its closest competitor. As noted earlier, the propensity score is used here to reduce or eliminate differences between online respondents and the general population, not its online sub-population. Nevertheless, the evidence suggests that the Propensity Score Select methodology is comparatively effective at reducing bias in responses to questions about online behaviors.

## Table 8. Accuracy of the Responses to "Online Behaviors" (since Jan 1, 2011)

| Modal Response | Benchmark | Direct Invitation | River | Router | Propensity Score |
|---|---|---|---|---|---|
| % | % | % | % | % | % |
| Made Online Purchase | 56.1 | 50.6 | 57.3 | 50.9 | 57.6 |
| Banked Online | 58.1 | 73.6 | 64.2 | 72.1 | 68.6 |
| Used Social Media | 64.1 | 71.3 | 72.1 | 66.8 | 71.4 |
| Uploaded Picture | 61.8 | 57.1 | 54.4 | 57.4 | 57.8 |
| Watched Video Online | 70.9 | 72.5 | 73.8 | 75.5 | 75.4 |
| Participated in Online | 86.4 | 73.9 | 78.5 | 76.1 | 83.7 |
| *Key Measures* | | | | | |
| *Base* | *846* | *1100* | *1100* | *1098* | *1000* |
| *Mean Absolute Deviation* | | 7.8 | 5.6 | 6.9 | 5.1 |
| *Variance* | | 27 | 8.2 | 18.8 | 10.9 |

| | | | | | |
|---|---|---|---|---|---|
| *MSE* | | *88.4* | *39.4* | *66* | *36.7* |
| *MSE vs. PSS* | | -141% | -7% | -80% | |

Overall, twenty-three questions were evaluated across the survey's four main content sections. Table 9 shows that responses from individuals selected through the Propensity Score Select methodology differed by 3.4 percentage points, on average, from the benchmark. The table indicates, as well, that the Propensity Score Select MSE was 103 percent lower than the Router MSE, its closest competitor.

In contrast to earlier tables, Table 9 reports the percentage of respondents within each propensity score quintile. It shows, for instance, that approximately four in ten Direct Invitation, River, and Router respondents are members of Quintile 1 versus an expectation of two in ten. In addition, Quintile 2 is over-represented in those three sources, while Quintiles 3, 4 and 5 are under-represented. The Propensity Score Select methodology contributed to a substantial reduction in bias by selecting a lower percentage of individuals from Quintiles 1-2, and a higher percentage from Quintiles 3-5.

## Table 9. Accuracy of the Responses to All "Content" Questions

| All Content Questions | Benchmark | Direct Invitation | River | Router | Propensity Score |
|---|---|---|---|---|---|
| *Key Measures* | | | | | |
| *Base* | *1019* | *1100* | *1100* | *1098* | *1000* |
| *% Quintile 1* | 20% | 38.5% | 40.1% | 39.6% | 20% |
| *% Quintile 2* | 20% | 26.3% | 24.2% | 25.5% | 20% |
| *% Quintile 3* | 20% | 17.8% | 18.6% | 18.2% | 20% |
| *% Quintile 4* | 20% | 10.1% | 10.3% | 10% | 20% |
| *% Quintile 5* | 20% | 7.4% | 6.8% | 6.6% | 20% |
| *Mean Absolute Deviation* | | 5.2 | 5 | 4.9 | 3.4 |
| *Variance* | | 17.2 | 18.1 | 16.9 | 8.8 |
| *MSE* | | 43.7 | 42.9 | 40.9 | 20.2 |
| *MSE vs. PSS* | | -116% | -112% | -103% | |

While exemplary embodiments have been described herein, it is expressly noted that these embodiments should not be construed as limiting, but rather that additions and modifications to what is expressly described herein also are included within the scope of the invention. Moreover, it is to be understood that the features of the various embodiments described herein are not mutually exclusive and can exist in various combinations and permutations, even if such combinations or permutations are not made express herein, without departing from the spirit and scope of the invention.

**Claims**

1. A method of selecting respondents for a survey to enhance sample representativeness, the method comprising:

   generating, via a processing device, a survey for response by a target population;
   determining, via the processing device, a respondent propensity score for a respondent; and
   determining, via the processing device, whether the respondent is a member of the target population based on the propensity score,
   wherein determining whether the respondent is a member of the target population based on the propensity score enhances sample representativeness.

2. The method of claim 1, further comprising associating a specified propensity score with the survey, wherein determining, via the processing device, whether the respondent is a member of the target population comprises comparing the propensity score associated with the respondent to the specified propensity score.

3. The method of claim 1, wherein determining, via the processing device, the respondent propensity score comprises generating a gateway question, wherein a response to the gateway question by the respondent is used to generate the respondent propensity score.

4. The method of claim 1, wherein determining, via the processing device, the respondent propensity score comprises retrieving the respondent propensity score from a previous calculation.

5. The method of claim 1, further comprising distributing the survey online, wherein distributing the survey online comprises distributing the survey using river sampling.

6. The method of claim 5, wherein a source of respondents includes an opt-in panel, the respondents of the opt-in panel having associated propensity scores and the method further comprises:

   associating the respondents in the opt-in panel with the survey based on the propensity scores associated with the respondents.

7. A non-transitory computer readable storage medium storing instruction, wherein execution of the instructions by a processing device causes the processing device to implement a method of selecting respondents for a survey to enhance sample representativeness, comprising:

   generating, via the processing device, a survey for response by a target population;
   determining, via the processing device, a respondent propensity score for a respondent; and
   determining, via the processing device, whether the respondent is a member of the target population based on the propensity score,
   wherein determining whether the respondent is a member of the target population based on the propensity score enhances sample representativeness.

8. The medium of claim 7, wherein execution of the instruction causes the processing device to associate a specified propensity score with the survey, and wherein determining, via the processing device, whether the respondent is a member of the target population comprises comparing the propensity score associated with the respondent to the specified propensity score.

9. The medium of claim 7, wherein determining, via the processing device, the respondent propensity score comprises generating a gateway question, wherein a response to the gateway question by the respondent is used to generate the respondent propensity score.

10. The medium of claim 7, wherein determining, via the processing device, the respondent propensity score comprises retrieving the respondent propensity score from a previous calculation.

11. The medium of claim 7, further comprising distributing the survey online, wherein distributing the survey online comprises distributing the survey using river sampling.

12. The medium of claim 11, wherein a source of respondents includes an opt-in panel, the respondents of the opt-in panel having associated propensity scores and the method further comprises:

associating the respondents in the opt-in panel with the survey based on the propensity scores associated with the respondents.

13. A system for selecting respondents for a survey to enhance sample representativeness, the system comprising:

a survey for response by a target population; and
a processing device to determine a respondent propensity score for a respondent and to determine whether the respondent is a member of the target population based on the propensity score, wherein determining whether the respondent is a member of the target population based on the propensity score enhances sample representativeness.

14. The system of claim 13, wherein the processing device associates a specified propensity score with the survey and determining whether the respondent is a member of the target population comprises comparing the propensity score associated with the respondent to the specified propensity score.

15. The system of claim 13, wherein determining the respondent propensity score comprises generating a gateway question, wherein a response to the gateway question by the respondent is used to generate the respondent propensity score, and wherein a source of respondents includes an opt-in panel for online surveys, the respondents of the opt-in panel having associated propensity scores and the processing device associates the respondents in the opt-in panel with the survey based on the propensity scores associated with the respondents.

**Survey Prioritization Engine**

100

105 — Specification Unit

115 — Priority Value Generator

110 — Mapping Unit

120 — Prioritizer

**FIG. 1**

200

230

220

240

210

3

2

1

0

-1

-2

-3

-5 -4 -3 -2 -1 0 1 2 3 4 5

215

**FIG. 2**

300

**Computing Device**

302

Processing
Device

304

**Storage**

Engine

100

306

I/O Device

308

Network
Interface

**FIG. 3**

400

413
Server

414
Server

420
Client

412
Server

411
Server

410
Server

Communication
Network

Client 421

Client 422

Client 423

Client 424

450

430
Database

430
Database

**FIG. 4**

510 — Define Priority Parameters for a Web-based Survey

520 — Associate Priority Value Ranges with
the Priority Parameters

530 — Generate Mapped Values for the Priority Parameters
Based on Quantifiable Characteristics Associated
with the Priority Parameters

540 — Compute a Priority Score for the
Survey Based on the Priority Values

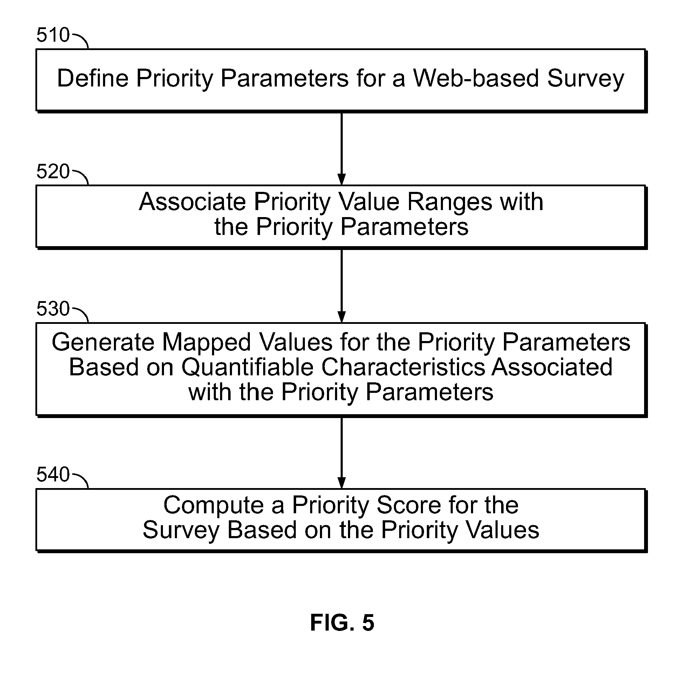

**FIG. 5**

Europäisches
Patentamt

European
Patent Office

Office européen
des brevets

# EUROPEAN SEARCH REPORT

**Application Number**

EP 13 15 7357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff) ----- | | INV. G06Q30/02 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 3 July 2013 | Weidmann, Matthias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.........................................................................................
& : member of the same patent family, corresponding
document

EPO FORM 1503 03.82 (P04C01)

**EP 2 634 742 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 13477180 B
- US 61605908 A